# FASCICULE DE BREVET EUROPEEN

(11) **EP 4 064 009 B1**
(45) Date de publication et mention de la délivrance du brevet: **14.05.2025**
(21) Numéro de dépôt: 22153254.2
(22) Date de dépôt: 25.01.2022
(51) Int. Cl.: G06F 3/01, G01C 23/00, G02B 27/01, G06F 3/0481, G06F 3/0484, G06F 3/0488, G08G 5/00

(54) **PROCEDE ET SYSTEME DE VISUALISATION ET DE GESTION D'UNE SITUATION DE L'ENVIRONNEMENT D'UN AERONEF**
VERFAHREN UND SYSTEM ZUR VISUALISIERUNG UND VERWALTUNG EINER SITUATION IN DER UMGEBUNG EINES LUFTFAHRZEUGS
METHOD AND SYSTEM FOR VIEWING AND MANAGING A SITUATION IN THE SURROUNDINGS OF AN AIRCRAFT

(30) Priorité: 22.03.2021 FR 2102665
(43) Date de publication de la demande: 28.09.2022
(73) Titulaire: Airbus Helicopters, 13725 Marignane Cedex (FR)
(72) Inventeur: ABDELLI, Kamel, 13011 MARSEILLE (FR); ALVAREZ, Richard, 83740 LA CADIERE D AZUR (FR)
(74) Mandataire: GPI Brevets

(56) Documents cités:
- EP-A1- 3 112 814
- WO-A1-2015/165838
- FR-A1- 3 057 685
- US-A1- 2020 183 154

## Description

La présente invention est du domaine des interfaces homme-machine d'un membre d'équipage d'un aéronef.

La présente invention concerne un procédé et un système de visualisation et de gestion d'une situation de l'environnement d'un aéronef.

Une interface homme-machine connue d'un aéronef permet de fournir des informations à un occupant de cet aéronef, par exemple le commandant de bord, un navigateur ou encore un opérateur de tir. De plus, une telle interface homme-machine permet à cet occupant de traiter ces informations et/ou de piloter des actions de l'aéronef par exemple.

Dans un souci de simplification, on utilisera par la suite uniquement le terme « occupant » pour désigner aussi bien le pilote, le commandant de bord, un navigateur, un opérateur de tir ou tout passager d'un aéronef dans le cadre de l'invention.

Une situation de l'environnement d'un aéronef peut comporter des informations relatives à cet environnement de l'aéronef et peut être présentée sur un ou plusieurs écrans intégrés au tableau de bord de l'aéronef. L'arrivée de nouvelles technologies a permis de la présenter directement sur une visière du casque de l'occupant, éventuellement en couleurs et en haute définition. Un système de visualisation intégré à un casque d'un occupant d'un aéronef peut être désigné par l'acronyme HMD pour la désignation en langue anglaise « Helmet Mounted Display » ou HMSD pour « Helmet Mounted Sight & Display ». Un tel système de visualisation peut par exemple comporter un écran transparent ou bien une surface transparente sur laquelle des informations ou des images peuvent être projetées.

De plus, une telle situation de l'environnement d'un aéronef peut être présentée en superposition de l'environnement extérieur à l'aéronef ou bien d'une image de cet environnement extérieur. Cette situation de l'environnement d'un aéronef peut être présentée sous une forme en deux dimensions ou en trois dimensions.

Par exemple, le document US 5015188 décrit un dispositif et un procédé de présentation d'une situation de l'environnement d'un aéronef. Ce procédé permet notamment d'afficher sur un écran, éventuellement intégré à un casque d'un opérateur ou d'un pilote, plusieurs vues en perspective représentant l'aéronef et un ou plusieurs objets l'entourant dans un espace tridimensionnel. L'aéronef peut être représenté au centre de la vue, entouré par un ou plusieurs objets. Les positions affichées du ou des objets changent automatiquement en réponse à la rotation et/ou au déplacement de l'aéronef pour maintenir une orientation constante de chaque vue. Des cercles concentriques et des lignes radiales peuvent être affichés pour indiquer des distances relatives entre l'aéronef et un ou plusieurs objets. Une vue se rapprochant d'une vue réelle d'un opérateur situé dans l'aéronef peut également être représentée.

De plus, le document US 8723696 décrit un dispositif et un procédé permettant l'affichage de deux images, une image dite « tactique » et une image dite « stratégique » relatives à l'environnement d'un aéronef sur un même écran ou sur deux écrans distincts. Un point d'intérêt peut être sélectionné, par exemple par ses coordonnées ou directement sur l'image tactique affichée par une pression exercée ponctuellement sur un écran tactile. L'image tactique et l'image stratégique sont alors mises à jour en ajoutant des informations relatives au point d'intérêt sélectionné et éventuellement en zoomant sur le point d'intérêt sélectionné. L'image tactique et l'image stratégique peuvent être affichées selon des points de vues différents, l'une étant par exemple une vue en perspective et l'autre une vue plane.

Le document WO 2015/005849 décrit quant à lui un système et un procédé permettant le traitement d'informations relatives à l'environnement d'un véhicule de combat superposées à des images représentant l'environnement extérieur de ce véhicule. Les informations affichées sont stockées dans un module du véhicule et comportent par exemple la position et le type d'un objet de l'environnement.

Le document FR 3057685 décrit des procédés de désignation et d'affichage d'informations et un système de visualisation pour aéronef. Le système de visualisation comporte au moins deux écrans, par exemple un écran sur un tableau de bord de l'aéronef et un écran intégré à un casque d'un occupant de l'aéronef, ainsi qu'un dispositif de désignation permettant de sélectionner un objet de l'environnement, via sa représentation sur un des deux écrans.

Le dispositif de désignation peut être une dalle tactile associé à un écran, un pointeur déplacé à l'aide d'une souris par exemple ou encore un système de détermination de l'orientation de la ligne de visée du regard d'un occupant de l'aéronef. Pour chaque objet sélectionné sur un écran, un symbole est affiché en superposition ou à proximité de l'objet sur un autre écran ainsi qu'éventuellement des informations relatives à l'objet.

En outre, dans un aéronef, le champ de vision d'un occupant vers l'extérieur de cet aéronef peut être limité et réduit par des éléments structuraux divers, tels qu'un plancher, un plafond, des portes, ou encore des montants portant au moins une surface transparente. De plus, aucune vision directe vers l'environnement arrière de l'aéronef n'est possible.

Cette limitation du champ de vision vers l'extérieur peut être gênante pour un occupant d'un aéronef dans certaines situations, à proximité d'obstacles par exemple.

Une telle limitation du champ de vision vers l'extérieur peut également être problématique pour un aéronef à voilure tournante, désigné également « giravion », qui présente la particularité de pouvoir réaliser des déplacements dans toutes les directions, à savoir longitudinalement vers l'avant et vers l'arrière, verticalement vers le haut et vers le bas, ou encore latéralement.

Une visualisation complète de l'environnement proche d'un aéronef peut donc être intéressante pour avoir une connaissance complète de la situation du véhicule par rapport à son environnement, et notamment la connaissance des obstacles potentiellement proches de ce véhicule et situés hors du champ de vision vers l'extérieur de cet occupant.

Des systèmes d'aide à la vision existent et permettent à l'aide de caméras agencées à l'extérieur de l'aéronef d'obtenir une vision complète de l'environnement de l'aéronef. De plus, de tels systèmes d'aide à la vision peuvent également comporter des dispositifs d'amplification ou de filtrage afin d'améliorer la vision de nuit ou par mauvais temps par exemple.

En outre, le document EP 3376278 décrit un dispositif de visualisation intégré au casque d'un occupant d'un aéronef et permettant d'afficher un champ de vision décalé par rapport à l'orientation de ce casque. De la sorte, cet occupant peut avoir, à travers ce dispositif de visualisation, une vue représentant l'environnement extérieur décalé par rapport à l'orientation de sa tête. Des images de cet environnement extérieur sont captées à l'aide de caméras positionnées sur l'aéronef. Par exemple, lorsqu'une ligne de visée de l'occupant est déplacée d'un angle de décalage par rapport à la direction longitudinale de l'aéronef, le décalage d'images de l'environnement extérieur est proportionnel à cet angle de décalage de la ligne de visée.

L'arrière plan technologique de l'invention comporte également les documents EP 3112814 WO 2015/165838 et US 2020/183154.

La présente invention a alors pour but de s'affranchir des limitations mentionnées ci-dessus, en proposant une interface homme-machine alternative pour aéronef permettant d'afficher et de gérer une situation de l'environnement de l'aéronef.

La présente invention a pour objets un procédé selon la revendication 1 et un système selon la revendication 12 de visualisation et de gestion d'une situation d'un environnement d'un aéronef tels que décrits dans les revendications.

La présente invention a pour objet un procédé de visualisation et de gestion d'une situation d'un environnement d'un aéronef selon la revendication 1, l'aéronef comportant notamment des dispositifs de capture d'images pour capturer des images de l'environnement de l'aéronef, au moins un calculateur, au moins un dispositif de réception, au moins un premier dispositif de visualisation agencé à l'intérieur d'un cockpit de l'aéronef, au moins un second dispositif de visualisation destiné à être positionné au niveau de la tête d'un occupant de l'aéronef, au moins un capteur à l'intérieur de l'aéronef afin de déterminer une position et une orientation de ladite tête de l'occupant de l'aéronef par rapport à l'aéronef, un dispositif de sélection et un système de localisation de l'aéronef.

Les dispositifs de capture d'images sont orientés vers l'extérieur de l'aéronef et permettent ainsi de capter des images de l'environnement extérieur à l'aéronef sans rencontrer d'obstacles, contrairement à la vision de cet environnement extérieur par chaque occupant situé a l'intérieur de l'aéronef qui peut être entravée notamment par des éléments structuraux de l'aéronef ou un tableau de bord par exemple. Les dispositifs de capture d'images peuvent par exemple être positionnés partiellement à l'extérieur de l'aéronef.

Ces dispositifs de capture d'images peuvent être agencés de manière à capter des images couvrant conjointement la totalité de l'environnement extérieur dans lequel évolue l'aéronef, à savoir sur 360° autour d'un axe vertical et sur 360° autour d'un axe horizontal du véhicule. Les dispositifs de capture d'images permettent ainsi l'acquisition d'images de l'environnement couvrant par exemple une sphère autour de l'aéronef.

Ledit au moins un premier dispositif de visualisation peut être un écran agencé dans un cockpit de l'aéronef, par exemple sur un tableau de bord de l'aéronef ou sur une console de l'aéronef. Ledit au moins un premier dispositif de visualisation peut encore être une partie du parebrise de l'aéronef sur lequel une image est projetée et dont l'opacité peut être modifiée.

Ledit au moins un second dispositif de visualisation est destiné à être positionné au niveau de la tête d'un occupant, par exemple devant les yeux de l'occupant. Ledit au moins un second dispositif de visualisation peut être intégré dans un casque d'un occupant de l'aéronef et peut comporter un écran transparent intégré au casque, et à la visière du casque par exemple. Ledit au moins un second dispositif de visualisation peut encore être tout ou partie de la visière transparente du casque sur lequel une image est projetée et dont l'opacité peut être modifiée. Ledit au moins un second dispositif de visualisation peut encore être intégré à une paire de lunettes.

Le calculateur peut comporter au moins un processeur et au moins une mémoire, au moins un circuit intégré, au moins un système programmable ou bien au moins un circuit logique, ces exemples ne limitant pas la portée donnée à l'expression « calculateur ». Le calculateur peut être un calculateur dédié à la réalisation du procédé selon l'invention ou être un calculateur partagé ayant de multiples fonctions. La mémoire peut par exemple stocker une ou plusieurs bases de données de terrain ainsi qu'un ou plusieurs algorithmes afin de réaliser le procédé selon l'invention.

Ledit au moins un dispositif de réception permet de recevoir diverses informations par une liaison sans fil. Ces informations peuvent comporter par exemple des coordonnées de points de l'environnement ou des informations sur les objets de l'environnement, tels que des bâtiments et des véhicules notamment, en particulier leurs positions dans le référentiel terrestre ainsi que leurs vitesses éventuelles.

Le système de localisation de l'aéronef peut comprendre par exemple un système de localisation par satellites.

Le procédé de visualisation et de gestion d'une situation d'un environnement d'un aéronef selon l'invention est remarquable en ce qu'il comporte les étapes suivantes :
- détermination d'une zone de surveillance dans l'environnement de l'aéronef,
- affichage d'une première image représentant la zone de surveillance sur le premier dispositif de visualisation,
- sélection sur le premier dispositif de visualisation d'un centre d'intérêt dans la zone de surveillance par l'intermédiaire d'un dispositif de sélection,
- affichage d'une seconde image représentant le centre d'intérêt sur le second dispositif de visualisation, et
- affichage d'un repère de visée pointant le centre d'intérêt sur la seconde image.

Le procédé selon l'invention permet ainsi, après identification d'une zone de surveillance de l'environnement de l'aéronef, de sélectionner un centre d'intérêt dans la zone de surveillance afin de l'afficher sur le second dispositif de visualisation. De la sorte, cet occupant de l'aéronef, qui peut être le pilote de l'aéronef, le commandant de bord, un navigateur ou encore un opérateur de tir, a une vision focalisée sur un centre d'intérêt identifié de la zone de surveillance sur le second dispositif de visualisation.

Le centre d'intérêt peut être ponctuel et constituer ainsi un point d'intérêt. Le centre d'intérêt peut par exemple être positionné sur un bâtiment ou un véhicule situé dans la zone de surveillance. Le centre d'intérêt peut aussi être une partie de la zone de surveillance où se trouvent par exemple plusieurs bâtiments ou véhicules susceptibles d'intérêt.

Ce procédé selon l'invention permet ainsi de fournir à au moins un occupant de l'aéronef une vision optimisée de la situation et/ou du positionnement de l'aéronef par rapport à un centre d'intérêt spécifique.

Lors de l'étape de détermination d'une zone de surveillance dans l'environnement de l'aéronef, la zone de surveillance peut être déterminée par une sélection par un occupant de l'aéronef, à l'aide du dispositif de sélection, sur le premier dispositif de visualisation, le premier dispositif de visualisation affichant une image représentant l'environnement de l'aéronef sous la forme d'une vue aérienne. Le dispositif de sélection peut comprendre une dalle tactile intégrée au premier dispositif de visualisation, un joystick, une souris ou tout moyen de sélection approprié relié au calculateur.

L'image représentant l'environnement de l'aéronef sous la forme d'une vue aérienne peut être construite à partir d'informations issues d'une base de données de terrain, stockée dans une mémoire du calculateur par exemple, ou bien d'informations d'une base de données de terrain distante reçues à l'aide d'un dispositif de réception de l'aéronef. L'image représentant l'environnement de l'aéronef peut encore être issue en tout ou partie d'une image captée et transmise par un autre aéronef ou un satellite par exemple. Cette image représentant l'environnement de l'aéronef peut aussi être construite, par le calculateur ou par un calculateur dédié, à partir des images captées par les dispositifs de capture d'images de l'aéronef et mise à plat sous la forme d'une vue aérienne.

Lors de l'étape de détermination d'une zone de surveillance dans l'environnement de l'aéronef, la zone de surveillance peut également être déterminée à partir d'une zone du paysage extérieur présente dans le champ de visions d'un occupant de l'aéronef. Cette zone du paysage extérieur regardée est par exemple caractérisée par une direction spécifique définie par exemple un gisement et un site dans un repère terrestre. La zone de surveillance est par exemple centrée sur cette direction spécifique et peut avoir des dimensions prédéterminées.

Le gisement est l'angle formé entre une direction longitudinale de l'aéronef et cette direction spécifique de la zone du paysage extérieur regardée projetées sur un plan horizontal du repère terrestre. Le site est l'angle entre cette direction longitudinale de l'aéronef et cette direction de la zone du paysage extérieur regardée projetées sur un plan vertical du repère terrestre passant par cette direction longitudinale. Un plan horizontal d'un repère terrestre est un plan perpendiculaire à la direction de la gravité terrestre et un plan vertical de ce repère terrestre est un plan parallèle à la direction de la gravité terrestre.

Cet occupant de l'aéronef peut observer directement le paysage à travers le second dispositif de visualisation qui est alors transparent ou semi-transparent et la direction de la zone regardée peut alors être déterminée par la position et l'orientation de la tête de cet occupant, à l'aide dudit au moins un capteur agencé à l'intérieur de l'aéronef ainsi que du système de localisation de l'aéronef déterminant la position et l'orientation de l'aéronef dans le référentiel terrestre.

Cet occupant de l'aéronef peut également observer une représentation du paysage par l'intermédiaire d'une vue affichée sur le second dispositif de visualisation. Cette vue peut être construite par le calculateur ou par un calculateur dédié par exemple à partir des images captées par les dispositifs de capture d'images de l'aéronef. Cette vue peut être une vue conforme du paysage, à savoir équivalente à une vision directe du paysage ou bien une vue décalée et/ou déformée du paysage. Le calculateur ou le calculateur dédié construit cette vue à partir des images captées par les dispositifs de capture d'images de l'aéronef, de la position et de l'orientation de la tête de l'occupant ainsi que de la position et de l'orientation de l'aéronef dans le référentiel terrestre. Dès lors, ce calculateur détermine, lors de cette construction, la direction de la zone du paysage extérieur regardée par cet occupant et donc son gisement et son site.

Lors de l'étape de détermination d'une zone de surveillance dans l'environnement de l'aéronef, la zone de surveillance peut aussi être déterminée par une réception des coordonnées de la zone de surveillance via un moyen de réception de l'aéronef. Ces coordonnées de la zone de surveillance peuvent être fournies par un autre véhicule, tel qu'un aéronef ou un navire, ou par une base au sol par exemple.

Lors de l'étape d'affichage d'une première image représentant la zone de surveillance, cette première image affichée sur le premier dispositif de visualisation peut être représentée sous la forme d'une vue aérienne.

Cette première image peut être construite à partir d'informations issues d'une base de données de terrain stockée dans une mémoire du calculateur par exemple ou bien d'informations reçues en temps réel à l'aide du dispositif de réception de l'aéronef d'une base de données de terrain distante. Cette première image peut encore être en tout ou partie issue d'une image captée et transmise par un autre aéronef ou un satellite par exemple. Cette première image peut aussi être construite par le calculateur ou par un calculateur dédié à partir des images captées par les dispositifs de capture d'images de l'aéronef et mise à plat sous la forme d'une vue aérienne.

De plus, lors de l'étape de sélection du centre d'intérêt, le dispositif de sélection permet de sélectionner le centre d'intérêt, mais également de manipuler la première image pour par exemple agrandir la première image, effectuer une rotation de l'image ou encore déplacer la première image afin de visualiser une partie de l'environnement située en dehors de la première image initialement affichée. Le dispositif de sélection peut être le même que celui éventuellement utilisé lors de l'étape de détermination d'une zone de surveillance dans l'environnement de l'aéronef.

Un centre d'intérêt ponctuel constituant un point d'intérêt peut être sélectionné par le dispositif de sélection en pointant ce point d'intérêt sur le premier dispositif de visualisation. Le repère de visée affiché lors de l'étape d'affichage d'un repère de visée indique alors ce point d'intérêt.

Un centre d'intérêt formé par une partie de la zone de surveillance peut être sélectionné par le dispositif de sélection en définissant un cadre sur le premier dispositif de visualisation à l'aide du dispositif de sélection. Dans ce cas, le repère affiché lors de l'étape d'affichage d'un repère de visée indique alors le centre de cette partie de la zone de surveillance.

Dans ce cas, le procédé selon l'invention peut également comporter une étape supplémentaire de sélection d'un point d'intérêt dans cette partie de la zone de surveillance à l'aide du second dispositif de visualisation et d'un dispositif de sélection annexe. Ensuite, le repère de visée indique le point d'intérêt sélectionné.

Lors de l'étape d'affichage d'une seconde image représentant le centre d'intérêt, la seconde image peut être construite à partir d'informations issues d'une base de données de terrain, stockée dans une mémoire du calculateur, ou bien d'informations reçues en temps réel à l'aide du dispositif de réception de l'aéronef depuis une base de données de terrain distante par exemple.

Le second dispositif de visualisation peut alors être opaque, l'occupant ne distinguant pas directement le paysage extérieur à l'aéronef à travers le second dispositif de visualisation. Cette seconde image est alors affichée indépendamment de la position et de l'orientation de la tête de l'occupant.

Selon une autre possibilité, le second dispositif de visualisation peut être transparent ou semi-transparent, l'occupant pouvant voir directement le paysage extérieur à l'aéronef en transparence à travers le second dispositif de visualisation. La seconde image est alors affichée en superposition du paysage réel, en prenant en compte la position et l'orientation de la tête de l'occupant.

La seconde image peut aussi être construite, par le calculateur ou par un calculateur dédié, à partir des images captées par les dispositifs de capture d'images de l'aéronef. Cette seconde image est alors affichée indépendamment de la position et de l'orientation de la tête de l'occupant. La seconde image peut comporter une vue centrale non déformée d'une première partie de l'environnement extérieur à l'aéronef et une vue périphérique déformée d'une seconde partie de l'environnement extérieur à l'aéronef, la vue périphérique étant située autour de la partie centrale. La première partie de l'environnement extérieur à l'aéronef comporte notamment le centre d'intérêt alors que la seconde partie de l'environnement extérieur à l'aéronef est située autour de la première partie.

La première partie et la seconde partie de l'environnement extérieur à l'aéronef peuvent couvrir la totalité de l'environnement autour de l'aéronef de sorte que la première et la seconde partie de l'environnement couvrent une sphère tout autour de l'aéronef. De la sorte, l'occupant peut avoir une vue sur 360° tout autour de l'aéronef sans bouger la tête, la seconde partie étant cependant affichée de façon déformée.

La seconde image peut être affichée sur le second dispositif de visualisation en deux dimensions ou bien en trois dimensions.

En outre, lors de cette étape d'affichage de la seconde image, une modification de la seconde image est réalisée suite à un mouvement de la tête de l'occupant en fonction des mouvements de la tête de l'occupant, des changements de la position et de l'orientation de la tête de l'occupant. Dans ce but, l'étape d'affichage de la seconde image peut comporter une sous-étape de détermination de la position et de l'orientation de la tête de l'occupant suite à un mouvement de la tête de l'occupant afin de caractériser le mouvement de la tête de l'occupant et une sous-étape de calcul d'une nouvelle seconde image en fonction de la position et de l'orientation de la tête de l'occupant et à partir des images de l'environnement de l'aéronef captées par les dispositifs de capture d'images.

De plus, suite à l'étape d'affichage d'un repère de visée indiquant le centre d'intérêt, un déplacement du casque peut provoquer un déplacement équivalent du repère de visée sur la seconde image. Le déplacement du repère de visée suit le déplacement de la tête de l'occupant de sorte que le repère de visée n'indique donc plus le centre d'intérêt.

Par ailleurs, le procédé selon l'invention peut comporter des étapes complémentaires. Par exemple, le procédé selon l'invention peut comporter une première étape complémentaire d'affichage d'informations relatives à la zone de surveillance sur la première image. Selon un autre exemple, le procédé selon l'invention peut comporter une deuxième étape complémentaire d'affichage d'informations relatives au centre d'intérêt et éventuellement à l'environnement proche du centre d'intérêt sur la seconde image. Ces informations peuvent être de différents types et permettent d'identifier par exemple la nature de bâtiments ou de véhicules. Ces informations peuvent également fournir une distance, une identité, un niveau d'alerte et éventuellement une vitesse d'objets identifiés, sous la forme d'un vecteur vitesse comprenant la direction et la valeur de cette vitesse des objets identifiés. Ces informations peuvent être transmises par un autre aéronef ou une base au sol, via des protocoles de communication connus et sont réceptionnées à l'aide d'un dispositif de réception de l'aéronef.

Le procédé selon l'invention permet ainsi une détection, une reconnaissance, une identification d'objets de l'environnement de l'aéronef avec une couverture de l'environnement tout autour de l'aéronef. Le procédé selon l'invention permet aussi de se focaliser en particulier sur des centres d'intérêt susceptibles d'être présents dans l'environnement de l'aéronef.

Le procédé selon l'invention peut aussi comporter les deux étapes supplémentaires suivantes :
- asservissement d'un organe mobile pointant sur le repère de visée, et
- verrouillage de l'organe mobile sur le repère de visée par un dispositif de verrouillage.

Cet organe mobile est de préférence agencé sur l'aéronef. Un organe mobile peut être par exemple un projecteur lumineux, une lance à eau ou encore tout élément ou équipement permettant une association point à point avec la position pointée par le repère de visée, et en particulier le point d'intérêt sélectionné.

Le dispositif de verrouillage peut par exemple comprendre un bouton poussoir agencé sur le tableau de bord de l'aéronef ou bien sur un levier de pilotage de l'aéronef. Suite à ce verrouillage, tout mouvement du casque de l'occupant ne provoque plus de déplacement du repère de visée qui est alors dirigé vers le même point de l'environnement quels que soient les mouvements du casque.

Le procédé selon l'invention peut enfin comporter une étape d'activation de l'organe mobile en direction du repère de visée verrouillé. L'organe mobile est par exemple dirigé vers le centre d'intérêt si aucun mouvement du casque de l'occupant n'a eu lieu suite à l'étape d'affichage du repère de visée.

La présente invention vise également un système de visualisation et de gestion d'une situation de l'environnement de l'aéronef. Un tel système comporte des dispositifs de capture d'images pour capturer des images de l'environnement de l'aéronef, au moins un calculateur, au moins un dispositif de réception, au moins un premier dispositif de visualisation agencé à l'intérieur d'un cockpit de l'aéronef, au moins un second dispositif de visualisation destiné à être positionné au niveau de la tête d'un occupant de l'aéronef, au moins un capteur agencé à l'intérieur de l'aéronef afin de déterminer une position et une orientation de la tête de l'occupant par rapport à l'aéronef et un système de localisation de l'aéronef dans un référentiel terrestre.

Ce système de visualisation et de gestion d'une situation de l'environnement de l'aéronef est configuré pour mettre en œuvre le procédé précédemment décrit.

La présente invention vise aussi un aéronef comportant un tel système de visualisation et de gestion d'une situation de l'environnement d'un aéronef.

L'invention et ses avantages apparaîtront avec plus de détails dans le cadre de la description qui suit avec des exemples donnés à titre illustratif en référence aux figures annexées qui représentent :
- la figure 1, une vue de côté d'un aéronef,
- la figure 2, un schéma synoptique du procédé selon l'invention,
- la figure 3, une vue globale du procédé,
- la figure 4, une vue du premier dispositif de visualisation,
- la figure 5, une vue représentant la sélection du centre d'intérêt sur le premier dispositif de visualisation,
- la figure 6, une vue représentant la tête d'un occupant et le second dispositif de visualisation, et
- la figure 7, une vue de l'affichage sur le second dispositif de visualisation.

Les éléments présents dans plusieurs figures distinctes sont affectés d'une seule et même référence.

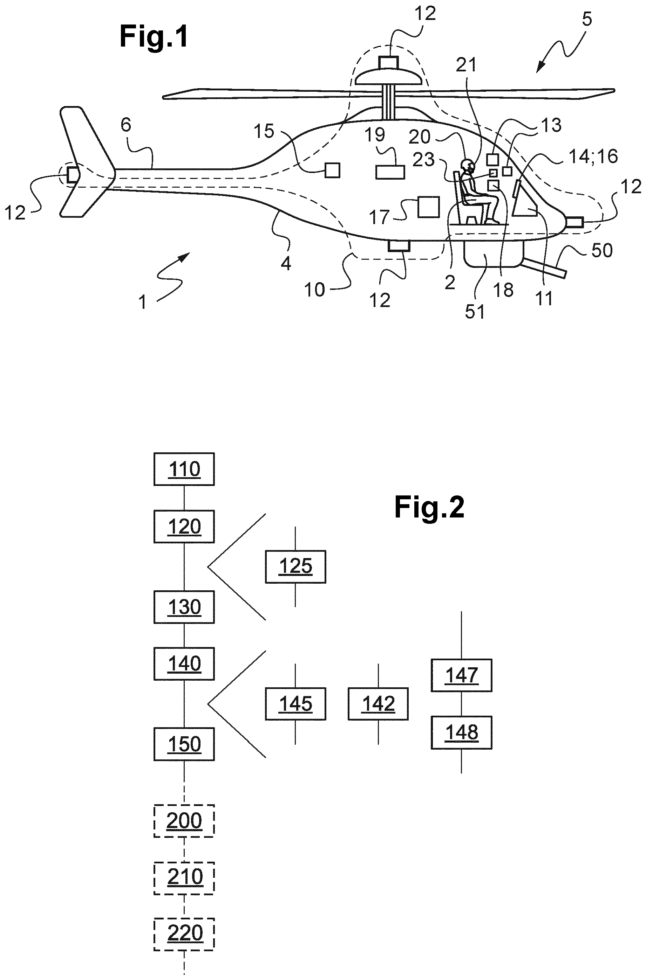

La figure 1 représente un aéronef 1 comportant un système 10 de visualisation et de gestion d'une situation de l'environnement de l'aéronef 1. L'aéronef 1 représenté sur la figure 1 est un giravion comportant par exemple un fuselage 4, une poutre de queue 6 et un rotor principal 5 de sustentation. Cependant d'autres types d'aéronef 1, tel qu'un aéronef à voilure fixe, voire d'autres types de véhicules, tel un navire ou encore un véhicule automobile par exemple, peuvent comporter un tel système 10.

Le système 10 de visualisation et de gestion d'une situation de l'environnement de l'aéronef 1 comporte, au moins un calculateur 19, des dispositifs de capture d'images 12 pour capturer des images de l'environnement de l'aéronef 1, au moins un capteur 13 agencé dans l'aéronef 1, au moins un dispositif de réception 17, au moins un premier dispositif de visualisation 14 agencé à l'intérieur de l'aéronef 1, au moins un second dispositif de visualisation 21 destiné à être positionné au niveau de la tête d'un occupant 2 de l'aéronef 1 et un système de localisation 15 de l'aéronef 1 dans un référentiel terrestre.

L'occupant 2 peut être un pilote, un copilote, le commandant de bord, un navigateur, un opérateur de tir de l'aéronef 1 par exemple.

Ledit au moins un capteur 13 est configuré pour déterminer la position et l'orientation de la tête de l'occupant 2 dans l'aéronef 1.

Deux capteurs 13 sont représentés solidaires de l'aéronef 1 selon la figure 1. Cependant, un seul capteur 13 peut être suffisant pour déterminer l'orientation et la position du casque 20 dans l'aéronef 1. De même, plus de deux capteurs 13 peuvent être utilisés pour déterminer l'orientation et la position du casque 20 dans l'aéronef 1. Un ou plusieurs capteurs 13 peuvent aussi être positionnés sur le casque 20 et coopérer avec un ou plusieurs capteurs 13 fixes et solidaires du cockpit de l'aéronef 1. Un tel capteur 13 peut être magnétique, optique et/ou inertiel. Un tel capteur 13 est connu en langue anglaise sous la désignation « Head Tracker ».

Par exemple dans le cas d'un capteur 13 magnétique, un ensemble de bobines est agencé par exemple dans le cockpit de l'aéronef 1 et produisent un champ magnétique. Un capteur magnétique est monté sur le casque 20 et détecte les modifications du champ magnétique capté lors des mouvements de la tête de l'occupant 2 et permet ainsi de déterminer la position et l'orientation de la tête.

Dans le cas d'un capteur optique 13, un ou plusieurs émetteurs optiques sont par exemple fixés sur le casque 20. Un ou plusieurs senseurs sont positionnés dans le cockpit de l'aéronef 1 et captent le faisceau émis respectivement par chaque émetteur et permettent d'en déduire la position et l'orientation de la tête de l'occupant 2. Inversement, chaque émetteur optique peut être fixé dans le cockpit de l'aéronef 1 et chaque senseur est positionné sur le casque 20.

Le système de localisation 15 permet de fournir la position et éventuellement la vitesse de l'aéronef 1. Le système de localisation 15 est par exemple un dispositif de localisation par satellites.

Ledit au moins un dispositif de réception 17 de données permet de recevoir des informations sur les objets, tels que des bâtiments et des véhicules. Ledit au moins un dispositif de réception 17 permet notamment de recevoir diverses informations par une liaison sans fil, par exemple à hautes fréquences. Ces informations peuvent comporter par exemple des coordonnées ou des informations sur des objets de l'environnement, tels que des bâtiments et des véhicules notamment, en particulier leurs positions dans le référentiel terrestre ainsi que leurs vitesses éventuelles.

Les dispositifs de capture d'images 12 de l'environnement de l'aéronef 1 sont positionnés de manière à capter des images couvrant conjointement l'environnement extérieur dans sa totalité autour de l'aéronef 1. Ces dispositifs de capture d'images 12 peuvent capter des images dans le domaine visibles et/ou infrarouge notamment. Le système 10 de vision périphérique selon l'invention peut par exemple comporter six dispositifs de capture d'images 12, tels que des caméras.

Par exemple, quatre dispositifs de capture d'images 12 peuvent être agencés sur un plan horizontal et situés respectivement à la pointe avant du fuselage 4 de l'aéronef 1, à l'arrière de la poutre de queue 6, sur le côté droit et le côté gauche de l'aéronef 1. Deux dispositifs de capture d'images 12 peuvent aussi être agencés par exemple sur un plan vertical et positionnés respectivement au-dessus du rotor principal 5 et en dessous du fuselage 4.

Chaque dispositif de capture d'images 12 est relié au calculateur 19 ou à un calculateur dédié afin de lui transmettre les images captées de l'environnement extérieur à l'aéronef 1. Le calculateur 19 ou le calculateur dédié peut alors construire une image complète de l'environnement extérieur à l'aéronef 1, éventuellement sous la forme d'une sphère complète.

Le calculateur 19 ou le calculateur dédié peut être éventuellement intégré à un système avionique de l'aéronef 1.

Ledit au moins un premier dispositif de visualisation 14 agencé à l'intérieur de l'aéronef 1 peut comporter un écran agencé sur un tableau de bord 11 de l'aéronef 1 ou bien sur une console de l'aéronef 1. Un premier dispositif de visualisation 14 peut en particulier être un écran muni d'une dalle tactile constituant un dispositif de sélection 16 utilisable par l'occupant 2. Un dispositif de sélection 16 utilisable par l'occupant 2 peut aussi être un joystick, une souris ou tout moyen de sélection approprié relié au calculateur 19.

Ledit au moins un second dispositif de visualisation 21 est par exemple intégré dans le casque 20 porté par un occupant 2 de l'aéronef 1 et peut comporter un écran intégré à une visière de ce casque 20 ou être la visière de ce casque 20 sur laquelle est projetée une image. Ledit au moins un second dispositif de visualisation 21 peut aussi être intégré à une paire de lunettes portée par l'occupant 2.

Un second dispositif de visualisation 21 peut être transparent ou semi transparent permettant à l'occupant 2 de voir l'environnement situé autour de lui au travers de ce second dispositif de visualisation 21, éventuellement en superposition d'une image affichée. Un second dispositif de visualisation 21 peut aussi être rendu opaque de sorte que l'occupant 2 voit uniquement l'image affichée et ne voit pas l'environnement situé autour de lui. Le dispositif de visualisation 21 peut également être escamotable, afin de permettre à l'occupant 2 de l'escamoter pour avoir une vision directe de l'environnement situé autour de lui.

L'aéronef 1 comporte également un organe mobile 50 agencé sur une tourelle 51 fixée sous le fuselage 4 de l'aéronef 1. La tourelle 51 est permet une mobilité de l'organe mobile 50 vis-à-vis du fuselage 4 et permet d'orienter l'organe mobile 50 dans une direction souhaitée.

Le calculateur 19 peut comporter au moins une mémoire stockant des instructions permettant la mise en œuvre d'un procédé de visualisation et de gestion d'une situation de l'environnement de l'aéronef 1 dont un schéma synoptique est représenté sur la figure 2.

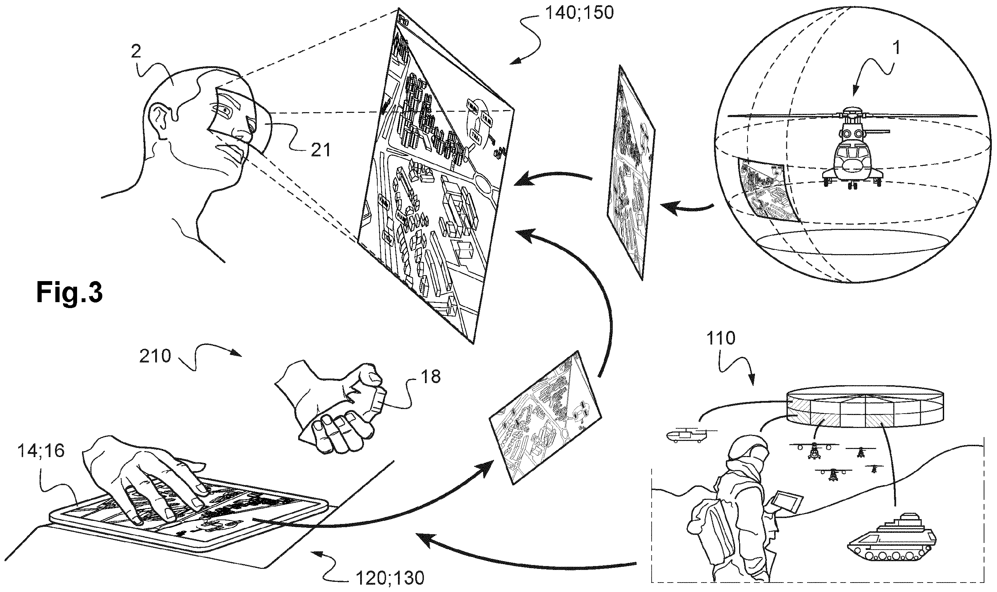

La figure 3 représente une vue globale illustrant les différentes étapes de ce procédé.

Ce procédé comporte les étapes suivantes.

Tout d'abord, une étape de détermination 110 d'une zone de surveillance dans l'environnement de l'aéronef 1 est réalisée.

Cette zone de surveillance peut être déterminée par un occupant 2 de l'aéronef 1 à l'aide du dispositif de sélection 16, en la sélectionnant sur le premier dispositif de visualisation 14, le premier dispositif de visualisation 14 affichant une image représentant l'environnement de l'aéronef 1, par exemple sous la forme d'une vue aérienne.

Cette zone de surveillance peut aussi être déterminée par l'intermédiaire d'une zone du paysage extérieur regardée par un occupant 2 de l'aéronef 1. La zone de surveillance est alors centrée sur la zone regardée et présente des dimensions prédéterminées. La zone de surveillance peut par exemple être un cercle centré sur la zone regardée et avoir un rayon égal à une ou plusieurs centaines de mètres.

Cette zone de surveillance peut encore être déterminée par une réception des coordonnées de la zone de surveillance via le dispositif de réception 17. Ces coordonnées sont par exemple envoyées par un opérateur situé en dehors du véhicule comme représenté sur la figure 3.

Ensuite, une étape d'affichage 120 d'une première image représentant la zone de surveillance sur le premier dispositif de visualisation 14 est réalisée.

La zone de surveillance peut être affichée sur le premier dispositif de visualisation 14 sous la forme d'une vue aérienne.

La première image peut être construite à partir d'informations reçues en temps réel à l'aide du dispositif de réception de l'aéronef 1 depuis une base au sol, un autre aéronef ou un satellite par exemple. La première image peut aussi être construite à partir d'informations contenues dans une base de données de terrain stockée dans une mémoire du calculateur 19. Cette première image peut encore être construite par le calculateur 19 à partir des images captées par les dispositifs de capture d'images 12.

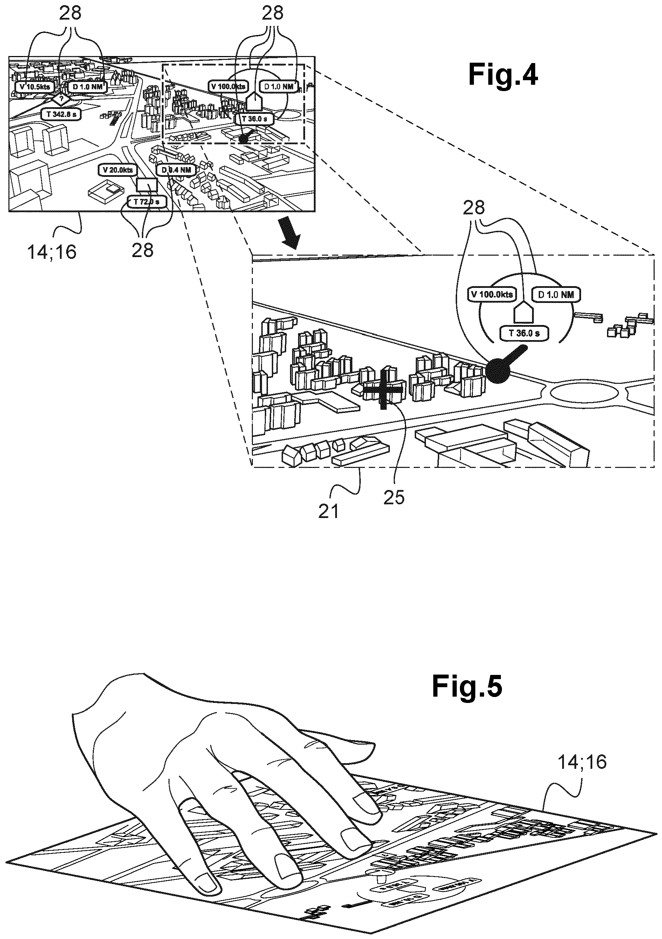

L'occupant 2 peut ainsi visualiser une première image limitée à la zone de surveillance sur un premier dispositif de visualisation 14, sur le tableau de bord 11 ou sur une console comme représenté sur la figure 4. Sa vision n'est pas perturbée par des éléments extérieurs à la zone de surveillance et peut donc se concentrer essentiellement sur la zone de surveillance.

De plus, le procédé selon l'invention peut comporter une première étape complémentaire d'affichage 125 d'informations 28 relatives à la zone de surveillance sur la première image. Ces informations 28 peuvent être de différents types et permettent d'identifier par exemple la nature de bâtiments ou véhicules. Ces informations 28 peuvent être contenues dans une base de données stockée dans une mémoire du calculateur 19 et/ou reçues par le dispositif de réception 17.

Une étape de sélection 130 d'un centre d'intérêt dans la zone de surveillance sur le premier dispositif de visualisation 14 peut alors être réalisée par l'intermédiaire d'un dispositif de sélection 16. Cette étape de sélection 130 est réalisée par un occupant 2 de l'aéronef 1.

Afin de faciliter cette sélection d'un centre d'intérêt, l'occupant 2 peut avantageusement manipuler la première image à l'aide du dispositif de sélection 16. La première image peut par exemple être agrandie, réduite, déplacée et/ou tournée.

Lorsque le dispositif de sélection 16 est une dalle tactile intégrée au premier dispositif de visualisation 14, l'occupant 2 peut manipuler la première image et sélectionner le centre d'intérêt à l'aide de sa main comme représenté sur la figure 5.

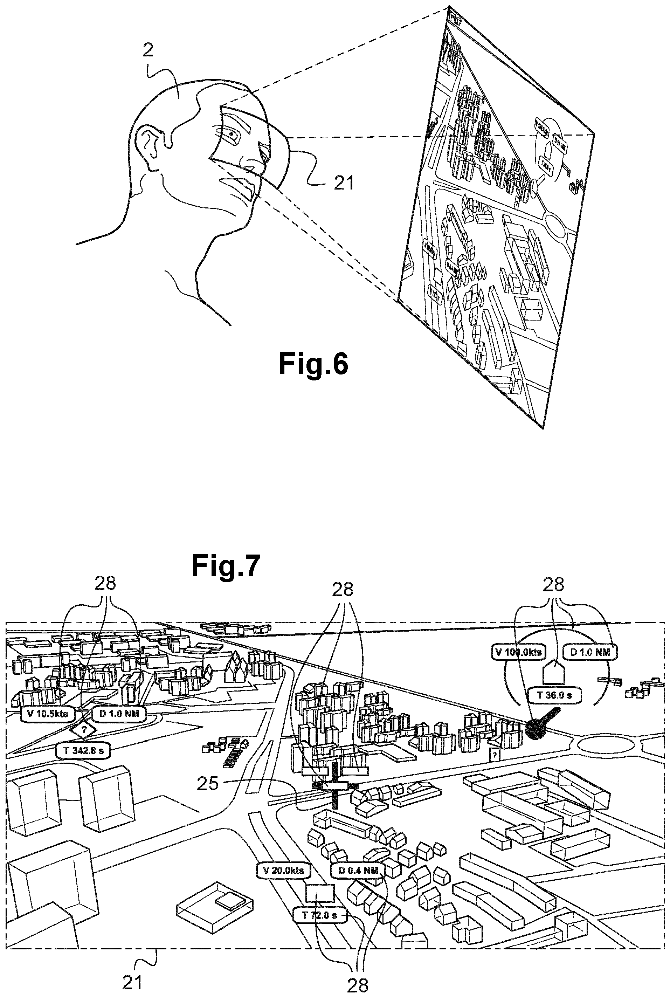

Ensuite, une étape d'affichage 140 d'une seconde image représentant le centre d'intérêt sur le second dispositif de visualisation 21 est réalisée. De la sorte, l'occupant 2 portant le casque 20 a une vision avantageusement limitée à ce centre d'intérêt et éventuellement à la zone entourant ce centre d'intérêt à l'aide du second dispositif de visualisation 21 comme représenté sur la figure 6.

Le centre d'intérêt sélectionné peut être une partie de la zone de surveillance. Dans ce cas, l'occupant 2 peut définir un cadre à l'aide du dispositif de sélection 16 sur la première image affichée sur le premier dispositif de visualisation 14, ce cadre définissant la partie de la zone de surveillance et de la sorte le centre d'intérêt sélectionné. Lors de l'étape d'affichage 140, la seconde image est alors limitée à ce cadre définissant le centre d'intérêt sélectionné, comme représenté sur la figure 4.

Le centre d'intérêt sélectionné peut être un point sélectionné à l'aide du dispositif de sélection 16 sur la première image affichée sur le premier dispositif de visualisation 14 et constituant alors un point d'intérêt. Lors de l'étape d'affichage 140, la seconde image comporte alors le centre d'intérêt sélectionné positionné au centre de la seconde image ainsi que la zone située autour de ce centre d'intérêt dans l'environnement de l'aéronef 1. Les dimensions de la zone située autour de ce centre d'intérêt sont par exemple prédéterminées.

Les dimensions de la zone située autour de ce centre d'intérêt peuvent par exemple correspondre à un cercle d'un rayon égal à 100 mètres et centré sur le centre d'intérêt. Lorsque le centre d'intérêt est un objet en mouvement, les dimensions de la zone située autour de ce centre d'intérêt peuvent également être fonction de la vitesse d'avancement de cet objet en mouvement. Ces dimensions peuvent alors correspondre à un cercle centré sur l'objet et d'un rayon égal la distance que l'objet peut parcourir en 10 secondes par exemple à l'instant de la connaissance de sa vitesse de déplacement.

La seconde image peut être affichée sur le second dispositif de visualisation 21 en fonction de la position et de l'orientation du casque 20 de l'occupant 2. Ainsi, si l'occupant 2 n'a pas la tête orientée en direction du centre d'intérêt, le centre d'intérêt ne sera pas affiché sur le second dispositif de visualisation 21. Un indicateur, une flèche par exemple, peut être affiché pour indiquer à l'occupant 2 dans quelle direction orienter sa tête pour pouvoir voir une représentation du centre d'intérêt sur le second dispositif de visualisation 21. La position et l'orientation du casque 20 porté par l'occupant 2 sont déterminées par l'intermédiaire d'au moins un capteur 13 et du dispositif de localisation 15 de l'aéronef 1.

Lorsque l'occupant 2 n'a pas la tête orientée en direction du centre d'intérêt et que le centre d'intérêt n'est pas affiché sur le second dispositif de visualisation 21, l'occupant 2 peut aussi sélectionner une option de recentrage par l'intermédiaire d'un moyen de sélection adapté, permettant un affichage du centre d'intérêt au centre du second dispositif de visualisation 21, indépendamment de la position de la tête de l'occupant 2. Ensuite, tout mouvement de la tête de l'occupant 2 modifie l'affichage sur le second dispositif de visualisation 21 à partir de la position centrée du centre d'intérêt tant que l'option de recentrage n'est pas désactivée, par exemple à l'aide du moyen de sélection adapté ou d'un autre moyen de sélection dédié.

Dans ce cas, le second dispositif de visualisation 21 peut être rendu transparent ou semi-transparent afin que l'occupant 2 puisse voir directement le paysage extérieur à l'aéronef 1 en transparence, la seconde image étant visible en superposition de ce paysage extérieur à l'aéronef 1.

Une représentation du paysage extérieur à l'aéronef 1 construite à partir des images captées par les dispositifs de capture d'images 12 peut être affichée sur le second dispositif de visualisation 21 rendu alors opaque si besoin. La seconde image est alors visible en superposition de cette représentation du paysage extérieur à l'aéronef 1.

La seconde image peut aussi être affichée sur le second dispositif de visualisation indépendamment de la position et de l'orientation du casque 20 de l'occupant 2. Dans ce cas, le second dispositif de visualisation 21 est opaque et l'occupant 2 ne distingue pas le paysage extérieur à l'aéronef 1au travers de ce second dispositif de visualisation 21.

La seconde image peut aussi être affichée en superposition d'une représentation du paysage extérieur à l'aéronef 1 construite à partir des images captées par les dispositifs de capture d'images 12.

En outre, lors de mouvements du casque 20, une modification de la seconde image est réalisée en fonction de ces mouvements du casque 20 et des changements de la position et de l'orientation du casque 20. Dans ce but, l'étape d'affichage 140 de la seconde image peut comporter une sous-étape de détermination 147 de la position et de l'orientation du casque 20 afin de définir les amplitudes de ces mouvements du casque 20 et une sous-étape de calcul 148 d'une nouvelle seconde image en fonction ces mouvements du casque 20 et à partir des images de l'environnement de l'aéronef captées par les dispositifs de capture d'images 12.

La seconde image peut être affichée sur le second dispositif de visualisation 21 en deux dimensions ou bien en trois dimensions.

De plus, le procédé selon l'invention peut comporter une deuxième étape complémentaire d'affichage 145 d'informations 28 relatives au centre d'intérêt et éventuellement à la zone située autour de ce centre d'intérêt sur la seconde image. Ces informations 28 peuvent être contenues dans une base de données stockée dans une mémoire du calculateur 19 et/ou peuvent être reçues par le dispositif de réception 17.

Ensuite, une étape d'affichage 150 d'un repère de visée 25 sur la seconde image est réalisée, ce repère d'affichage indiquant le centre d'intérêt.

Lorsque le centre d'intérêt sélectionné lors de l'étape de sélection 130 est ponctuel et constitue un point d'intérêt, le repère de visée 25 indique ce point d'intérêt. Le repère de visée 25 est alors situé comme le point d'intérêt au centre de la seconde image comme représenté sur la figure 7.

Lorsque le centre d'intérêt sélectionné est une partie de la zone de surveillance, le repère de visée 25 indique par défaut un centre de cette partie de la zone de surveillance lors de l'étape d'affichage 150.

Toutefois, l'occupant 2 portant le casque 20 peut sélectionner un point d'intérêt parmi la partie de la zone de surveillance lors d'une étape supplémentaire de sélection 142 d'un point d'intérêt dans cette partie de la zone de surveillance. Cette sélection d'un point d'intérêt est effectuée à l'aide du second dispositif de visualisation 21 et d'un dispositif de sélection annexe 23. Le repère de visée 25 indique alors ce point d'intérêt sélectionné lors de l'étape supplémentaire de sélection 142. Le repère de visée 25 et le point d'intérêt ne sont alors pas situés au centre de la seconde image sur le second dispositif de visualisation 21 comme représenté sur la figure 4.

Par ailleurs, suite à cet affichage du repère de visée 25 indiquant le centre d'intérêt, le repère de visée 25 peut être déplacé sur la seconde image suite à un déplacement du casque 20. En conséquence, le repère de visée 25 n'indique donc plus le centre d'intérêt sur la seconde image.

En outre, le procédé selon l'invention peut comporter des étapes supplémentaires
Le procédé selon l'invention peut comporter une étape d'asservissement 200 de l'organe mobile 50 de l'aéronef 1 sur le repère de visée 25, puis une étape de verrouillage 210 de l'organe mobile 50 sur le repère de visée 25 par un dispositif de verrouillage 18. Le dispositif de verrouillage 18 peut comprendre un bouton poussoir agencé sur le tableau de bord 11 de l'aéronef 1.

Ainsi, avant l'étape de verrouillage 210, tout changement de la position du repère de visée 25 sur la seconde image est pris en compte par l'organe mobile 50. Ce changement de position peut être consécutif à la réalisation de l'étape supplémentaire de sélection 142 d'un point d'intérêt dans la partie de la zone de surveillance ou bien à un mouvement du casque 2.

Suite à l'étape de verrouillage 210, un tel changement de la position du repère de visée 25 sur la seconde image n'est pas pris en compte par l'organe mobile 50.

Suite à ce verrouillage, tout mouvement du casque 20 de l'occupant 2 ne provoque plus de déplacement du repère de visée 25 qui est alors dirigé vers le même point de l'environnement quels que soient les mouvements du casque 20.

Le procédé selon l'invention peut enfin comporter une étape d'activation 220 de l'organe mobile 50 en direction du repère de visée 25 verrouillé. L'organe mobile 50 a ainsi pour cible le repère de visée 25 verrouillé.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Procédé de visualisation et de gestion d'une situation d'un environnement d'un aéronef (1), au moins un calculateur (19), au moins un dispositif de réception (17), au moins un premier dispositif de visualisation (14) agencé à l'intérieur d'un cockpit dudit aéronef (1), au moins un second dispositif de visualisation (21) destiné à être positionné au niveau de la tête d'un occupant (2) dudit aéronef (1), au moins un capteur (13) agencé à l'intérieur dudit aéronef (1) afin de déterminer une position et une orientation de ladite tête dudit occupant (2) par rapport audit aéronef (1), un dispositif de sélection (16) et un système de localisation (15) dudit aéronef (1),
ledit procédé comportant les étapes suivantes :
- détermination (110) d'une zone de surveillance dans ledit environnement dudit aéronef (1),
- affichage (120) d'une première image représentant ladite zone de surveillance sur ledit premier dispositif de visualisation (14),
- sélection (130) sur ledit premier dispositif de visualisation (14) d'un centre d'intérêt dans ladite zone de surveillance par l'intermédiaire dudit dispositif de sélection (16),
- affichage (140) d'une seconde image représentant ledit centre d'intérêt sur ledit second dispositif de visualisation (21),
- affichage (150) d'un repère de visée (25) indiquant ledit centre d'intérêt sur ladite seconde image,
**caractérisé en ce que** ladite étape de détermination (110) d'une zone de surveillance dans ledit environnement dudit aéronef (1) est réalisée,
- par une sélection par un occupant (2) dudit aéronef (1) à l'aide d'un dispositif de sélection (16) sur ledit premier dispositif de visualisation (14), ledit premier dispositif de visualisation (14) affichant une image représentant ledit environnement dudit aéronef (1) sous la forme d'une vue aérienne, ou
- par une réception des coordonnées de ladite zone de surveillance via un moyen de réception (17), et
lors de ladite étape d'affichage (140), ledit aéronef (1) comportant des dispositifs de capture d'images (12) pour capturer des images dudit environnement dudit aéronef (1), ladite seconde image est construite à partir des images dudit environnement dudit aéronef (1) captée par lesdits dispositifs de capture d'images (12), ladite seconde image étant affichée indépendamment de la position et de l'orientation de ladite tête dudit occupant (2).

2. Procédé selon la revendication 1,
**caractérisé en ce que** lors de ladite étape d'affichage (120), ladite zone de surveillance est affichée sur ledit premier dispositif de visualisation (14) sous la forme d'une vue aérienne.

3. Procédé selon l'une quelconque des revendications 1 à 2,
**caractérisé en ce que** ladite zone de surveillance a des dimensions prédéterminées.

4. Procédé selon l'une quelconque des revendications 1 à 3,
**caractérisé en ce que** ledit centre d'intérêt est ponctuel et constitue un point d'intérêt, ledit repère de visée (25) indiquant ledit point d'intérêt lors de ladite étape d'affichage (150).

5. Procédé selon l'une quelconque des revendications 1 à 3,
**caractérisé en ce que** ledit centre d'intérêt est une partie de ladite zone de surveillance, ledit repère de visée (25) indiquant un centre de ladite partie de ladite zone de surveillance lors de ladite étape d'affichage (150).

6. Procédé selon la revendication 5,
**caractérisé en ce que**, ledit aéronef (1) comportant un dispositif de sélection annexe (23), ledit procédé comporte une étape supplémentaire de sélection (142) d'un point d'intérêt dans ladite partie de ladite zone de surveillance à l'aide dudit second dispositif de visualisation (21) et dudit dispositif de sélection annexe (23), ledit repère de visée (25) indiquant ledit point d'intérêt lors de ladite étape d'affichage (150).

7. Procédé selon l'une quelconque des revendications 1 à 6,
**caractérisé en ce que** ladite seconde image comporte une vue centrale non déformée d'une première partie dudit environnement extérieur audit aéronef (1) et une vue périphérique déformée d'une seconde partie dudit environnement extérieur audit aéronef, ladite vue périphérique étant située autour de ladite partie centrale, ladite première partie dudit environnement extérieur audit aéronef (1) comportant ledit centre d'intérêt, ladite seconde partie dudit environnement extérieur audit aéronef (1) étant située autour de ladite première partie.

8. Procédé selon la revendication 7,
**caractérisé en ce que** ladite première partie et ladite seconde partie dudit environnement couvrent conjointement la totalité dudit environnement autour dudit aéronef (1), lesdits dispositifs de capture d'images (12) étant agencés de manière à capter des images couvrant conjointement la totalité de l'environnement extérieur dans lequel évolue ledit aéronef (1).

9. Procédé selon l'une quelconque des revendications 1 à 8,
**caractérisé en ce que** ledit procédé comporte des étape complémentaire d'affichage (125,145) d'informations (28) relatives à ladite zone de surveillance sur ladite première image et audit centre d'intérêt et/ou à l'environnement dudit centre d'intérêt sur ladite seconde image.

10. Procédé selon l'une quelconque des revendications 1 à 9,
**caractérisé en ce que** suite à ladite étape d'affichage (150) d'un repère de visée (25) indiquant ledit centre d'intérêt, ledit repère de visée (25) est déplacé sur ladite seconde image suite à un déplacement de ladite tête dudit occupant (2) suivant ledit déplacement de ladite tête.

11. Procédé selon l'une quelconque des revendications 1 à 10,
**caractérisé en ce que**, ledit aéronef (1) comportant un organe mobile (50), ledit procédé comporte les étapes supplémentaires suivantes :
- asservissement (200) dudit organe mobile (50) pointant sur ledit repère de visée (25),
- verrouillage (210) dudit organe mobile (50) sur ledit repère de visée (25) par un dispositif de verrouillage (18),
- activation (220) dudit organe mobile (50) en direction dudit repère de visée (25) verrouillé.

12. Système (10) de visualisation et de gestion d'une situation de l'environnement dudit aéronef (1), ledit système (10) comportant des dispositifs de capture d'images (12) pour capturer des images dudit environnement dudit aéronef (1), au moins un calculateur (19), au moins un dispositif de réception (17), au moins un premier dispositif de visualisation (14) agencé à l'intérieur d'un cockpit dudit aéronef (1), au moins un second dispositif de visualisation (21) destiné à être positionné au niveau de la tête d'un occupant (2) dudit aéronef (1), au moins un capteur agencé à l'intérieur dudit aéronef (1) afin de déterminer une position et une orientation de ladite tête dudit occupant (2) par rapport audit aéronef (1) et un système de localisation (15) dudit aéronef (1),
ledit système (10) comportant un organe mobile (50) dudit aéronef (1), un dispositif de sélection (16) et un dispositif de sélection annexe (23),
**caractérisé en ce que** ledit système (10) est configuré pour mettre en œuvre la méthode selon l'une quelconque des revendications 1 à 11.

13. Système (10) selon la revendication 12,
**caractérisé en ce que** ledit dispositif de sélection (16) est une dalle tactile intégrée audit premier dispositif de visualisation (14), un joystick, une souris reliée audit calculateur (19).

14. Aéronef (1),
**caractérisé en ce que** ledit aéronef (1) comporte un système (10) de visualisation et de gestion d'une situation de l'environnement dudit aéronef (1) selon l'une quelconque des revendications 12 à 13.

## Patentansprüche

1. Verfahren zum Visualisieren und Steuern einer Situation in einer Umgebung eines Luftfahrzeugs (1) mit mindestens einem Rechner (19), mindestens einer Empfangseinrichtung (17), mindestens einer ersten Anzeigevorrichtung (14), die in einem Cockpit des Luftfahrzeugs (1) angeordnet ist, mindestens einer zweiten Anzeigevorrichtung (21), die vorgesehen ist, um auf der Höhe des Kopfes eines Insassen (2) des Luftfahrzeugs (1) positioniert zu werden, mindestens einem Sensor (13), der innerhalb des Luftfahrzeugs (1) angeordnet ist, um eine Position und eine Ausrichtung des Kopfes des Insassen (2) in Bezug auf das Luftfahrzeug (1) zu bestimmen, einer Auswahlvorrichtung (16) und einem System (15) zum Orten des Luftfahrzeugs (1), wobei das Verfahren die folgenden Schritte umfasst:
- Bestimmen (110) eines Überwachungsbereichs in der Umgebung des Luftfahrzeugs (1),
- Anzeigen (120) eines ersten Bildes, das den Überwachungsbereich darstellt, auf der ersten Anzeigevorrichtung (14),
- Auswählen (130) eines Zentrums des Interesses im Überwachungsbereich auf der ersten Anzeigevorrichtung (14) über die Auswahlvorrichtung (16),
- Anzeigen (140) eines zweiten Bildes, das das Zentrum des Interesses darstellt, auf der zweiten Anzeigevorrichtung (21),
- Anzeigen (150) einer Zielmarkierung (25), die das Zentrum des Interesses kennzeichnet, im zweiten Bild,
**dadurch gekennzeichnet, dass** der Schritt des Bestimmens (110) eines Überwachungsbereichs in der Umgebung des Luftfahrzeugs (1) durchgeführt wird
- durch Auswählen durch einen Insassen (2) des Luftfahrzeugs (1) mit Hilfe einer Auswahleinrichtung (16) auf der ersten Anzeigeeinrichtung (14), wobei die erste Anzeigeeinrichtung (14) ein Bild anzeigt, das die Umgebung des Luftfahrzeugs (1) in Form einer Luftaufnahme darstellt, oder
- durch Empfang der Koordinaten des Überwachungsbereichs über ein Empfangsmittel (17), und
dass während des Schritts des Anzeigens (140), wobei das Luftfahrzeug (1) Bildaufnahmevorrichtungen (12) zum Aufnehmen von Bildern der Umgebung des Luftfahrzeugs (1) umfasst, das zweite Bild aus den von den Bildaufnahmevorrichtungen (12) aufgenommenen Bildern der Umgebung des Luftfahrzeugs (1) aufgebaut wird, wobei das zweite Bild unabhängig von der Position und Ausrichtung des Kopfes des Insassen (2) angezeigt wird.

2. Verfahren nach Anspruch 1,
**dadurch gekennzeichnet, dass** in dem Schritt des Anzeigens (120) der Überwachungsbereich auf der ersten Anzeigevorrichtung (14) in Form einer Luftaufnahme angezeigt wird.

3. Verfahren nach einem der Ansprüche 1 bis 2,
**dadurch gekennzeichnet, dass** der Überwachungsbereich vorgegebene Abmessungen hat.

4. Verfahren nach einem der Ansprüche 1 bis 3,
**dadurch gekennzeichnet, dass** das Zentrum des Interesses punktförmig ist und einen Punkt von Interesse darstellt, wobei die Zielmarke (25) den Punkt von Interesse während des Schritts des Anzeigens (150) anzeigt.

5. Verfahren nach einem der Ansprüche 1 bis 3,
**dadurch gekennzeichnet, dass** das Zentrum des Interesses ein Teil des Überwachungsbereichs ist, und dass die Zielmarkierung (25) während des Schritts des Anzeigens (150) ein Zentrum des Teils des Überwachungsbereichs kennzeichnet.

6. Verfahren nach Anspruch 5,
**dadurch gekennzeichnet, dass** das Luftfahrzeug (1) eine zusätzliche Auswahlvorrichtung (23) umfasst, und dass das Verfahren einen zusätzlichen Schritt des Auswählens (142) eines Punktes von Interesse in dem Teil des Überwachungsbereichs mit Hilfe der zweiten Anzeigevorrichtung (21) und der zusätzlichen Auswahlvorrichtung (23) umfasst, wobei die Zielmarkierung (25) den Punkt von Interesse während des Schritts des Anzeigens (150) anzeigt.

7. Verfahren nach einem der Ansprüche 1 bis 6,
**dadurch gekennzeichnet, dass** das zweite Bild eine unverzerrte zentrale Ansicht eines ersten Teils der Umgebung außerhalb des Luftfahrzeugs (1) und eine verzerrte periphere Ansicht eines zweiten Teils der Umgebung außerhalb des Luftfahrzeugs umfasst, wobei die periphere Ansicht den zentralen Teil umgibt, wobei der erste Teil der Umgebung außerhalb des Luftfahrzeugs (1) das Zentrum des Interesses umfasst und der zweite Teil der Umgebung außerhalb des Luftfahrzeugs (1) den ersten Teil umgibt.

8. Verfahren nach Anspruch 7,
**dadurch gekennzeichnet, dass** der erste Teil und der zweite Teil der Umgebung zusammen die Gesamtheit der Umgebung um das Luftfahrzeug (1) abdecken, wobei die Bildaufnahmevorrichtungen (12) angeordnet sind, um Bilder aufzunehmen, die zusammen die Gesamtheit der äußeren Umgebung abdecken, in der sich das Luftfahrzeug (1) bewegt.

9. Verfahren nach einem der Ansprüche 1 bis 8,
**dadurch gekennzeichnet, dass** das Verfahren zusätzliche Schritte (125, 145) des Anzeigens von Informationen (28) bezüglich des Überwachungsbereichs auf dem ersten Bild und des Zentrums des Interesses und/oder der Umgebung des Zentrums des Interesses auf dem zweiten Bild umfasst.

10. Verfahren nach einem der Ansprüche 1 bis 9,
**dadurch gekennzeichnet, dass** nach dem Schritt des Anzeigens (150) einer Zielmarkierung (25), die das Zentrum des Interesses anzeigt, die Zielmarkierung (25) auf dem zweiten Bild nach einer Bewegung des Kopfes des Insassen (2) entsprechend der Bewegung des Kopfes verschoben wird.

11. Verfahren nach einem der Ansprüche 1 bis 10,
**dadurch gekennzeichnet, dass** das Luftfahrzeug (1) ein bewegliches Element (50) aufweist und das Verfahren die folgenden zusätzlichen Schritte umfasst:
- Nachführen (200) des beweglichen Elements (50), das auf die Zielmarkierung (25) zeigt,
- Verriegeln (210) des beweglichen Organs (50) an der Zielmarkierung (25) durch eine Verriegelungsvorrichtung (18),
- Aktivieren (220) des beweglichen Organs (50) in Richtung der verriegelten Zielmarkierung (25).

12. System (10) zum Visualisieren und Steuern einer Situation der Umgebung des Luftfahrzeugs (1), wobei das System (10) Bildaufnahmevorrichtungen (12) zum Aufnehmen von Bildern der Umgebung des Luftfahrzeugs (1), mindestens einen Rechner (19), mindestens eine Empfangseinrichtung (17), mindestens eine erste Anzeigevorrichtung (14), die in einem Cockpit des Luftfahrzeugs (1) angeordnet ist, mindestens eine zweite Anzeigevorrichtung (21), die vorgesehen ist, um auf der Höhe des Kopfes eines Insassen (2) des Luftfahrzeugs (1) positioniert zu werden, mindestens einen Sensor, der innerhalb des Luftfahrzeugs (1) angeordnet ist, um eine Position und eine Ausrichtung des Kopfes des Insassen (2) in Bezug auf das Luftfahrzeug (1) zu bestimmen, und ein System (15) zum Orten des Luftfahrzeugs (1) umfasst,
wobei das System (10) ein bewegliches Element (50) des Luftfahrzeugs (1), eine Auswahlvorrichtung (16) und eine zusätzliche Auswahlvorrichtung (23) umfasst,
**dadurch gekennzeichnet, dass** das System (10) konfiguriert ist, um das Verfahren gemäß einem der Ansprüche 1 bis 11 auszuführen.

13. System (10) nach Anspruch 12,
**dadurch gekennzeichnet, dass** die Auswahlvorrichtung (16) ein in die erste Anzeigevorrichtung (14) integriertes berührungsempfindliches Feld, ein Joystick oder eine mit dem Rechner (19) verbundene Maus ist.

14. Luftfahrzeug (1), **dadurch gekennzeichnet, dass** das Luftfahrzeug (1) ein System (10) zum Visualisieren und Steuern einer Situation in der Umgebung des Luftfahrzeugs (1) gemäß einem der Ansprüche 12 bis 13 umfasst.

## Claims

1. Method for displaying and managing a situation in an environment of an aircraft (1), at least one calculator (19), at least one receiving device (17), at least one first display device (14) arranged inside a cockpit of said aircraft (1), at least one second display device (21) intended to be positioned at the head of an occupant (2) of said aircraft (1), at least one sensor (13) arranged inside said aircraft (1) in order to determine a position and an orientation of said head of said occupant (2) with respect to said aircraft (1), a selection device (16) and a system for tracking (15) said aircraft (1),
said method comprising the following steps:
- determining (110) a monitoring zone in the environment of said aircraft (1),
- displaying (120) a first image representing the monitoring zone on said first display device (14),
- selecting (130) on said first display device (14) a centre of interest in said monitoring zone by means of said selection device (16),
- displaying (140) a second image representing said centre of interest on said second display device (21),
- displaying (150) a sighting marker (25) indicating said centre of interest on said second image,
**characterized in that** said step of determining (110) a monitoring zone in said environment of said aircraft (1) is performed,
- by a selection by an occupant (2) of said aircraft (1) by means of a selection device (16) on said first display device (14), said first display device (14) displaying an image representing said environment of said aircraft (1) in the form of an aerial view, or
- by receiving the coordinates of said monitoring zone via a receiving means (17), and
during said display step (140), said aircraft (1) comprising image capturing devices (12) to capture the images of said environment of said aircraft (1), said second image is constructed from the images of said environment of said aircraft (1) captured by said image capturing devices (12), said second image being displayed irrespective of the position and orientation of said head of said occupant (2).

2. Method according to Claim 1,
**characterized in that** during said display step (120), said monitoring zone is displayed on said first display device (14) as an aerial view.

3. Method according to any one of Claims 1 to 2,
**characterized in that** said monitoring zone has predetermined dimensions.

4. Method according to any one of Claims 1 to 3,
**characterized in that** said centre of interest is a single point and constitutes a point of interest, said sighting marker (25) indicating said point of interest during the display step (150).

5. Method according to any one of Claims 1 to 3,
**characterized in that** said centre of interest is a part of the monitoring zone, said sighting marker (25) indicating a centre of said part of said monitoring zone during said display step (150).

6. Method according to Claim 5,
**characterized in that**, said aircraft (1) comprising an auxiliary selection device (23), said method comprises an additional step of selecting (142) a point of interest in said part of said monitoring zone by means of said second display device (21) and said auxiliary selection device (23), said sighting marker (25) indicating said point of interest during said display step (150).

7. Method according to any one of Claims 1 to 6,
**characterized in that** said second image comprises a non-distorted central view of a first part of said environment outside said aircraft (1) and a distorted peripheral view of a second part of said environment outside said aircraft, said peripheral view being situated around said central part, said first part of said environment outside said aircraft (1) comprising said centre of interest, said second part of said environment outside the aircraft (1) being situated around the first part.

8. Method according to Claim 7,
**characterized in that** said first part and said second part of said environment together cover the whole of said environment around said aircraft (1), said image capture devices (12) being arranged so as to capture images that together cover the entire external environment in which said aircraft is travelling.

9. Method according to any one of Claims 1 to 8,
**characterized in that** said method comprises additional steps of displaying (125,145) information (28) relating to said monitoring zone on said first image and to said centre of interest and/or to the environment of said centre of interest on said second image.

10. Method according to any one of Claims 1 to 9,
**characterized in that** after said step of displaying (150) a sighting marker (25) indicating said centre of interest, said sighting marker (25) is moved on said second image following a movement of said head of said occupant (2), according to said movement of said head.

11. Method according to any one of Claims 1 to 10,
**characterized in that**, said aircraft (1) comprising a movable member (50), said method comprises the following additional steps:
- slaving (200) said movable member (50) pointing to said sighting marker (25),
- locking (210) said movable member (50) on said sighting marker (25) by means of a locking device (18),
- activating (220) said movable member (50) in the direction of said locked sighting marker (25).

12. System (10) for displaying and managing a situation in the environment of said aircraft (1), said system (10) comprising image capture devices (12) for capturing images of said environment of said aircraft (1), at least one calculator (19), at least one receiving device (17), at least one first display device (14) arranged inside a cockpit of said aircraft (1), at least one second display device (21) intended to be positioned at the head of an occupant (2) of said aircraft (1), at least one sensor arranged inside said aircraft (1) in order to determine a position and an orientation of said head of said occupant (2) with respect to said aircraft (1) and a system for tracking (15) said aircraft (1), said system (10) comprising a movable member (50) of said aircraft (1), a selection device (16) and an auxiliary selection device (23),
**characterized in that** said system (10) is configured to implement the method according to any one of the Claims 1 to 11.

13. System (10) according to Claim 12,
**characterized in that** said selection device (16) is a touch panel integrated into said first display device (14), a joystick, a mouse connected to said calculator (19).

14. Aircraft (1),
**characterized in that** said aircraft (1) comprises a system (10) for displaying and managing a situation in the environment of said aircraft (1) according to any one of Claims 12 to 13.
